(19) Europäisches Patentamt

European Patent Office

Office européen des brevets

(11) EP 1 688 705 A2

(12) EUROPEAN PATENT APPLICATION

(43) Date of publication:
09.08.2006 Bulletin 2006/32

(51) Int Cl.:
*G01C 19/56* (2006.01)  *G01P 15/14* (2006.01)

(21) Application number: 05076245.9

(22) Date of filing: 30.05.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 02.02.2005 US 49036

(71) Applicant: BEI Sensors & Systems Company, Inc.
Sylmar,
California 91342 (US)

(72) Inventors:
• Madni, Asad M.
Los Angeles, California 90064 (US)

• Costlow, Lynn E.
Clayton, California 94517 (US)
• Wells, Roger F.
Yorba Linda, California 92887 (US)
• Vuong, Jim B.
Northridge, California 91326 (US)

(74) Representative: Macpherson, Craig Stuart et al
Page Hargrave, Southgate, Whitefriars, Lewins
Mead
Bristol BS1 2NT (GB)

(54) **Combined gyroscope and 2-axis accelerometer**

(57)    A sensor having both gyroscope and accelerometer functions. The sensor includes a pair of masses, an anchor, a pair of support beams, a driver and a displacement measurement device. The pair of masses are configured to oscillate in a counter phase relationship with respect to each other. The anchor supports the pair of masses, and each of the support beams is used to couple one of the masses to the anchor. The driver drives the pair of masses to create a counter phase oscillation, and the displacement measurement device measures respective displacements of the masses in at least one direction. The sensor derives information regarding an acceleration experienced by the sensor in the at least one direction using a measurement of the displacements of the masses.

FIG. 1

## Description

FIELD OF THE INVENTION

The present invention relates to a gyroscope, and more particularly to a MEMS-based sensor having both rate gyroscope and accelerometer functions.

BACKGROUND OF THE INVENTION

In a conventional MEMS-based gyroscope, a pair of masses ("twin masses") are induced into an oscillatory motion in the $\pm$Y-axis direction. The oscillation of the masses can be caused by piezo-flexing of the support beams, forces generated by capacitive comb structures or other suitable means. The masses move in counter phase (i.e., anti phase). In other words, the masses move at the same frequency, but in opposite Y-axis directions.

Rotation of the MEMS-based gyroscope around the X-axis generates a Coriolis force that causes the masses to oscillate in the $\pm$ Z axis directions. This motion in the Z-axis direction is at substantially the same frequency as the Y-axis driving force and its magnitude (i.e., amplitude) is substantially directly proportional to the angular rate or the rate of rotation (i.e., angular motion) about the X-axis.

In automotive and other applications, an accelerometer is often used in addition to the gyroscope because while the gyroscope is generally used to measure angular rate of an object, an accelerometer is typically used to measure an acceleration (e.g., linear acceleration) experienced by the object. For example, in automotive Electronic Stability Control (ESC) brake applications where the vehicle yaw (turn) rate, lateral (sideways) acceleration and longitudinal (fore/aft) acceleration inertial motions are measured for input to the central brake Electronic Control Unit (ECU), both the angular rate and acceleration measurements are needed. The ECU then makes decisions regarding the autonomous (i.e., without driver input) asymmetric application of the brakes to stabilize the vehicle, if it is in a skid or out of control situation.

Currently, a separate accelerometer is typically used in addition to the gyroscope to measure acceleration in addition to the angular rotation rate of the object. Using such separate gyroscope and accelerometer can result in larger space requirements, higher cost and an increased number of components that can potentially fail.

Therefore, it is desirable to combine the functions of the gyroscope and the accelerometer into a single sensor, device or instrument.

SUMMARY

In an exemplary embodiment according to the present invention, a sensor having both gyroscope and accelerometer functions is provided. The sensor includes a pair of masses, an anchor, a pair of support beams, a driver and a displacement measurement device. The pair of masses are configured to oscillate in a counter phase relationship with respect to each other. The anchor supports the pair of masses, and each of the support beams is used to couple one of the masses to the anchor. The driver drives the pair of masses to create a counter phase oscillation, and the displacement measurement device measures respective displacements of the masses in at least one direction. The sensor derives information regarding an acceleration experienced by the sensor in the at least one direction using a measurement of the displacements of the masses.

In another exemplary embodiment according to the present invention, a method of detecting both acceleration and angular orientation using a sensor including a pair of masses, an anchor for supporting the pair of masses, and a pair of support beams, is provided. Each of the support beams is used to couple one of the masses to the anchor. The method includes driving the pair of masses to create a counter phase oscillation; measuring respective displacements of the masses in at least one direction; and deriving information regarding an acceleration experienced by the sensor in the at least one direction using a measurement of the displacements of the masses.

These and other aspects of the invention will be more readily comprehended in view of the discussion herein and accompanying drawings.

BRIEF DESCRIPTION OF THE DRAWINGS

FIG. 1 is a schematic perspective view of a sensor having gyroscope and accelerometer functions in an exemplary embodiment according to the present invention;
FIG. 2 is a schematic perspective view of a sensor having gyroscope and accelerometer functions in another exemplary embodiment according to the present invention; and

FIG. 3 is a schematic perspective view of a sensor having gyroscope and accelerometer functions in yet another exemplary embodiment according to the present invention.

DETAILED DESCRIPTION

In an exemplary embodiment according to the present invention, a sensor having both gyroscope and accelerometer functions is provided. The sensor includes an anchor on which a pair of masses, namely, a first mass and a second mass, are attached via respective support beams. Each of the support beams has a substantially square or rectangular cross section. In addition to providing gyroscope functions, when the sensor is accelerated in the Y-axis and/or the Z-axis (i.e., linear) directions, both the masses move in the same direction as the acceleration with respect to the anchor, thereby bending or flexing the support beams. Since the respective deflections are substantially proportional to the magnitude of the acceleration, by measuring the amount by which the support beams are bent and/or the amount by which the masses are displaced, the magnitude of the acceleration can be measured.

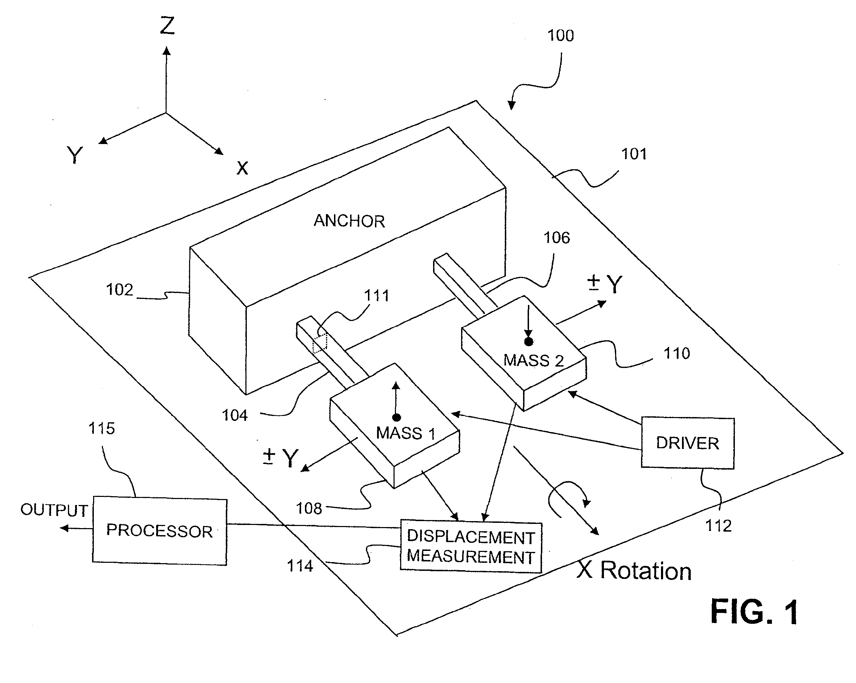

FIG. 1 is a schematic perspective diagram of a sensor 100 in an exemplary embodiment according to the present invention. The sensor 100 includes an anchor 102, a first mass 108 and a second mass 110. The first mass 108 and the second mass 110 are coupled to the anchor 102 via first and second support beams 104 and 106, respectively. A driver 112 drives the counter phase oscillation of the masses 108 and 110 in the $\pm$Y-axis direction, while a displacement measurement device 114 can be used to measure the displacements of the masses 108 and 110 in $\pm$Y-axis and/or $\pm$Z-axis directions. The displacement measurements are provided to a processor 115, which derives information regarding an acceleration experienced by the sensor in the $\pm$Y-axis and/or $\pm$Z-axis directions using the displacement measurements of the masses.

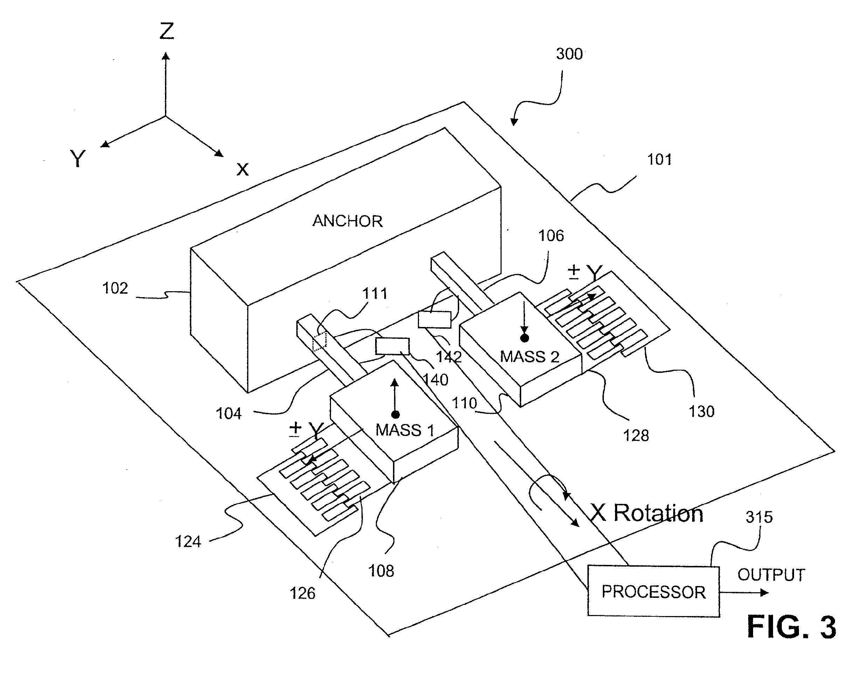

As shown in FIG. 1, the anchor 102 as well as the driver 112 and the displacement measurement device 114 are typically mounted on a substrate 101, which in turn would be mounted in a vehicle. There are parts of the sensor that are not illustrated in FIGs. 1-3 as they are not essential to the complete understanding of the invention. By way of example, only a portion of the substrate 101 is illustrated in each of FIGs. 1-3. In practice, the substrate 101 may have other elements (not shown) mounted on the portion of the substrate 101 shown or on another portion that is not shown. Also, the components of the sensor 100 would normally be packaged in a housing, which is not shown in the drawings.

The anchor 102 has a shape of an oblong box in FIGs. 1-3, however, it may have other suitable shapes in other embodiments. Similarly, the first and second masses 108 and 110 each have a shape of a relatively flat box, but may have other suitable shapes in other embodiments.

The support beams 104 and 106 each have a substantially square or rectangular cross-section, such as shown as the cross-section 111, which is illustrated in dotted lines in FIG. 1. The substantially square cross-section causes the support beams 104 and 106 to be substantially equally flexible in both the Y-axis and Z-axis directions. Further, since the support beams 104 and 106 have substantially the same stiffness, their respective deflections attributed to an acceleration are of substantially the same magnitude.

In the sensor 100, the anchor 102, the support beams 104, 106 and the masses 108, 110 can, for example, be fabricated from a single piece of a semiconductor material using any suitable micro-electromechanical system (MEMS) fabrication technique known to those skilled in the art. For example, the support beams 104 and 106 beams may be coated with a piezoresistive coating such as zinc oxide (ZnO) or subjected to boron diffusion to achieve resistance changes when flexed.

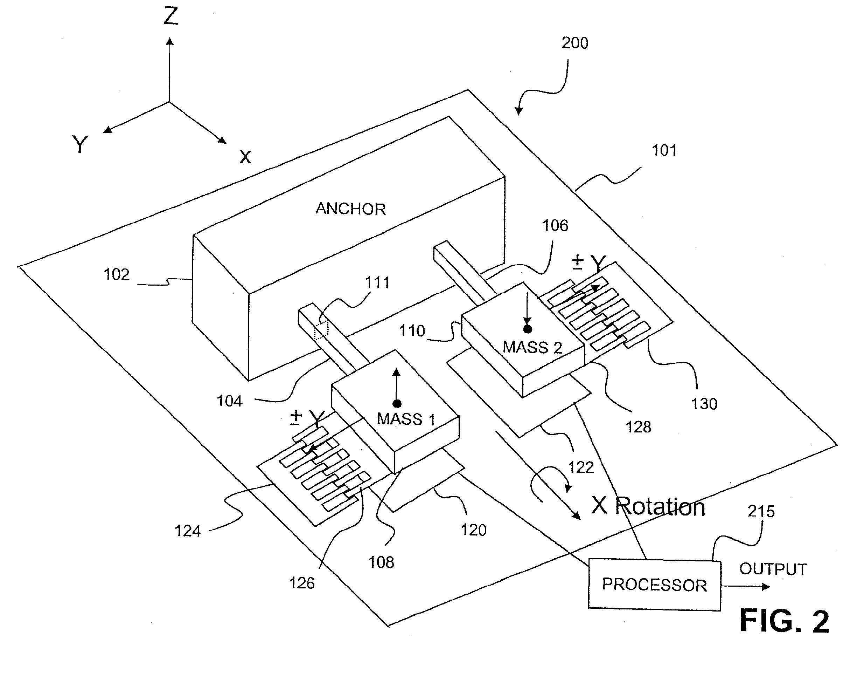

The sensor 100 is operated as a gyroscope by inducing the first and second masses 108, 110 into a counter phase oscillatory motion in the $\pm$Y-axis direction using the driver 112. In the counter phase oscillation, the first mass 108 and the second mass 110 move at substantially the same frequency, but in opposite Y-axis directions. The driver 112 may include any suitable driving device for causing the first and second masses 108 and 110 to move in counter phase with respect to each other, such as piezo-flexing of the support beams, or a comb assembly as will be described in reference to FIG. 2.

When the sensor is rotated about the X-axis as shown in FIG. 1, a Coriolis force is generated in the $\pm$Z-axis direction as indicated by the vertical arrows. The Coriolis force will cause the masses to oscillate in the Z-axis direction at substantially the same frequency as the oscillation of the masses 108, 110 in the Y-axis direction. In other words, the masses oscillate in the Z-axis direction with the frequency substantially corresponding to the driving force that drives the masses to oscillate in the Y-axis direction. By way of example, when the frequency of the counter phase oscillation is 11 kHz, the Z-axis oscillation also has the frequency of 11 kHz. Also, the amplitude of the oscillation in the Z-axis is substantially directly proportional to the angular rate of rotation of the masses about the X-axis.

The displacement of the masses 108 and 110 in the Y-axis and/or Z-axis directions can be measured using a displacement measurement device 114. The displacement measurement device 114 can include one or more of a variety of displacement measurement components for measuring the displacement of objects.

By way of example, the support beams 108 and 110 can be fabricated using a piezoelectric material that generates a voltage in response to the stress applied. As the masses are moved in the Y-axis direction and/or the Z-axis direction with respect to the anchor 102, the support beams are stressed (through bending or flexing) corresponding to the amount of the displacements. Therefore, the piezoelectric material generates voltage (e.g., across the support beams), which can be measured to determine the displacement of the masses 108 and 110.

As discussed above, the support beams 104 and 106 may be coated with a piezoresistive material such as ZnO. The piezoresistive coating would change its resistivity in response to a stress placed thereon. Therefore, by measuring the changes to the resistivity caused by the bending or flexing of the support beams 104 and 106, the displacement measurement device 114 can measure the displacement of the masses 108 and 110 in the Y-axis and/or Z-axis directions, and from the displacement of the masses 108 and 110 in the Z-axis direction, the angular rotation of the sensor 100 about the X-axis.

The sensor 100 can also be used as an accelerometer in the Y-axis direction and/or the Z-axis direction because the respective accelerations will move the first and second masses in the same corresponding direction. The motion of the masses 108 and 110 in the Y-axis and Z-axis directions can be measured using the same displacement measuring device 114, which may include one or more of a voltage measuring device that measures the voltage generated by the piezoelectric support beams 104 and 106, a resistance measuring device for measuring the change in resistivity of the piezoresistive coating applied on the support beams 104 and 106, capacitive plates that form capacitors with the masses 108 and 110, respectively, and a capacitance measuring device for measuring the capacitances thereof, and the comb structures that are coupled to the anchor 102 or the underlying substrate 101, and the masses 108 and 110, respectively.

By way of example, if the sensor 100 is subjected to an acceleration in the Y-axis direction, both masses 108 and 110 will move in the same direction under the influence of the accelerating force. Given that the stiffness of the support beams are substantially the same for both the first and second masses 108, 110, their respective deflections will be of substantially the same magnitude and directly proportional to the magnitude of the acceleration.

Of course, since the masses 108 and 110 are moving in counter phase with respect to each other, any motion of the masses in the positive or negative Y-axis direction due to the acceleration will be superimposed on the counter phase oscillation motion. The motions of the masses attributed to the driving force applied by the driver 112 and the motions of the masses attributed to the acceleration in the positive or negative Y-axis direction can be derived using the following two equations, Equation 1 and Equation 2:

$$(\text{Equation 1}) \quad M1_t + M2_t = (M1_d + M1_a) + (M2_d + M2_a)$$
$$= 2 \times M1_a = 2 \times M2_a; \text{ and}$$

$$(\text{Equation 2}) \quad M1_t - M2_t = (M1_d + M1_a) - (M2_d + M2_a)$$
$$= 2 \times M1_d = -2 \times M2_d.$$

In the above Equations 1 and 2, $M1_t$ and $M2_t$, respectively, are total displacements of the masses M1 and M2; $M1_d$ and $M2_d$, respectively, are displacements of the masses M1 and M2 due to the counter phase oscillation; and $M1_a$ and $M2_a$, respectively, are displacements of the masses M1 and M2 due to the acceleration in the Y-axis direction. It should be noted that $M1_d = -M2_d$ and $M1_a = M2_a$. This is the case because $M1_d$ and $M2_d$ are substantially the same displacements in opposite directions while $M1_a$ and $M2_a$ are substantially the same displacements in the same direction.

In other words, since the accelerating force has the effect of a Y-axis displacement offset to the counter-phased driven oscillations of the masses, the acceleration can be calculated by subtracting the $\pm$ driving oscillation motion from the total movement of the masses 1 and 2. In this manner, the result realized is the offset caused by the accelerating forces, which is in the same direction as and is directly proportional to the acceleration in magnitude.

In a similar manner to the Y-axis acceleration effects, acceleration in the Z-axis will displace the masses in the Z-axis direction. The Z-axis acceleration can be computed by subtracting the $\pm$ Coriolis induced motion, thereby deriving an offset, which is in the same direction as and is directly proportional to the magnitude of the acceleration in the Z-axis.

A sensor 200 of FIG. 2 is substantially the same as the sensor 100 of FIG. 1, except that each of the masses 108 and 110 functions as a capacitive plate, and the displacement measurement device 114 includes a pair of corresponding capacitive plates 120 and 122 that form respective capacitors with the masses 108 and 110. Also, the driver in FIG. 2 includes a pair of comb structures 124, 126 and 128, 130 for driving the respective masses 108 and 110 in a counter phase oscillatory motion.

The displacement measurement device of FIG. 2 can measure the amount of displacement of the masses 108 and 110 by measuring the capacitance of the capacitors formed by the masses 108 and 110 together with the corresponding capacitive plates 120 and 112, respectively. The capacitive plates 120 and 122, may, for example, be mounted on the underlying substrate 101 and/or the anchor 102. The capacitance information is provided to a processor 215 to derive information regarding an acceleration experienced by the sensor in the X-axis and/or Y-axis directions using the capacitance information, which is indicative of the displacements of the masses.

The displacement measuring device 114 may alternatively (or in addition to the capacitive plates) include a pair of comb structures for each of the masses 108 and 110. A first comb structure would include one half of the comb structure mounted on the mass 108, and the other one half mounted on the substrate 101 or the anchor 10,2 proximately to the portion of the comb structure mounted on the mass 108. The comb structure works as a variable capacitor to measure the displacement of the mass 108 in the Z-axis direction. Similarly, a second comb structure can be mounted to the mass 110, and at a corresponding location on the substrate 101 or the anchor 102, such that it measures the displacement of the mass 110 in the Z-axis direction.

A sensor 300 is substantially the same as the sensor 200 of FIG. 2, except that the sensor 300 includes a pair of measurement devices 140 and 142 for measuring the voltage generated by the support beams 104 and 106, respectively. Further, the measurement devices 140 and 142 may be used to measure the resistivity of the piezoresistive coating applied on the support beams 104 and 106, respectively. A processor 315 receives the measurements from the measurement devices 140 and 142, and uses the measurements to derive information regarding an acceleration experienced by the sensor in the $\pm$Y-axis and/or $\pm$Z-axis directions

While certain exemplary embodiments have been described above in detail and shown in the accompanying drawings, it is to be understood that such embodiments are merely illustrative of and not restrictive of the broad invention. It will thus be recognized that various modifications may be made to the illustrated and other embodiments of the invention described above, without departing from the broad inventive scope thereof. In view of the above it will be understood that the invention is not limited to the particular embodiments or arrangements disclosed, but is rather intended to cover any changes, adaptations or modifications which are within the spirit and scope of the present invention as defined by the appended claims and equivalents thereof.

## Claims

1. A sensor having both gyroscope and accelerometer functions, the sensor comprising:

   a pair of masses configured to oscillate in a counter phase relationship with respect to each other;
   an anchor for supporting the pair of masses;
   a pair of support beams, each of the support beams being used to couple one of the masses to the anchor;
   a driver for driving the pair of masses to create a counter phase oscillation; and
   a displacement measurement device for measuring respective displacements of the masses in at least one direction,
   wherein the sensor derives information regarding an acceleration experienced by the sensor in the at least one direction using a measurement of the displacements of the masses.

2. The sensor of claim 1, wherein the displacement measurement device includes a capacitive plate, a comb structure, and/or piezoresistive coating which is applied on the support beams.

3. The sensor of claim 1, wherein the accelerometer function comprises a 2-axis acceleration function, and wherein the sensor derives the information regarding the acceleration experienced by the sensor in two substantially perpendicular directions.

4. The sensor of claim 1, wherein the pair of masses, the pair of support beams and the anchor are fabricated using a micro electromechanical system (MEMS) fabrication technique.

5. The sensor of claim 1, wherein each of the support beams has a substantially square or rectangular cross-section.

6. The sensor of claim 1, wherein the support beams comprise piezoelectric material, and wherein the displacement measurement device measures the respective displacements of the masses by measuring a voltage generated by the support beams in response to the acceleration.

7. The sensor of claim 1, further comprising piezoresistive coating applied on the support beams, wherein the displacement measurement device measures the respective displacements of the masses by measuring an electrical signal generated using the piezoresistive coating in response to the acceleration.

8. The sensor of claim 1, wherein the driver comprises at least one capacitive comb structure for driving at least one of the pair of masses in an oscillatory motion.

9. The sensor of claim 1, wherein the displacement measurement device comprises a pair of capacitive plates for respectively forming capacitors with the pair of masses, and wherein the displacement measurement device measures the respective displacements of the masses by measuring a change in capacitances of the capacitors.

10. The sensor of claim 1, further comprising a processor for receiving the measurement of the displacements of the masses from the displacement measurement device, and for deriving the information regarding the acceleration experienced by the sensor in the at least one direction using the measurement of the displacements of the masses.

11. A method of detecting both acceleration and angular orientation using a sensor comprising a pair of masses, an anchor for supporting the pair of masses, and a pair of support beams, each of the support beams being used to couple one of the masses to the anchor, the method comprising:

> driving the pair of masses to create a counter phase oscillation;
> measuring respective displacements of the masses in at least one direction; and
> deriving information regarding an acceleration experienced by the sensor in the at least one direction using a measurement of the displacements of the masses.

12. The method of claim 11, wherein measuring the respective displacements comprises measuring the respective displacements of the masses in two directions, and outputting the information comprises outputting the information regarding the acceleration experienced by the sensor in two directions.

13. The method of claim 11, wherein each of the support beams has a substantially square or rectangular cross-section.

14. The method of claim 11, wherein the support beams comprise piezoelectric material, and wherein measuring the respective displacements comprises measuring a voltage generated by the support beams in response to the acceleration.

15. The method of claim 11, wherein piezoresistive coating is applied to the support beams, and wherein measuring the respective displacements of the masses comprises measuring an electrical signal generated using the piezoresistive coating in response to the acceleration.

16. The method of claim 11, wherein driving the pair of masses comprises driving at least one of the pair of masses in an oscillatory motion using at least one capacitive comb structure.

17. The method of claim 11, wherein measuring the respective displacements of the masses comprises measuring a change in capacitance of capacitors formed by the masses and a pair of capacitive plates.

18. The method of claim 11, wherein deriving the information regarding the acceleration experienced by the sensor comprises subtracting displacement components in a first direction attributed to the counter phase oscillation from the displacements of the masses in the first direction.

19. The method of claim 11, wherein deriving the information regarding the acceleration experienced by the sensor comprises subtracting displacement components in a second direction attributed to a Coriolis force from the displacements of the masses in the second direction.

20. A sensor having both gyroscope and accelerometer functions, the sensor comprising:

> a pair of masses configured to oscillate in a counter phase relationship with respect to each other;
> an anchor for supporting the pair of masses;
> a pair of support beams, each of the support beams being used to couple one of the masses to the anchor;
> driving means for driving the pair of masses to create a counter phase oscillation; and
> displacement measurement means for measuring respective displacements of the masses in at least one direction,
> wherein the sensor derives information regarding an acceleration experienced by the sensor in the at least one direction using a measurement of the displacements of the masses.

**FIG. 1**

EP 1 688 705 A2

FIG. 2

FIG. 3

EP 1 688 705 A2